Europäisches Patentamt

(19) **European Patent Office**

**Office européen des brevets**

(11) Numéro de publication: **0 168 326**
**A2**

(12) # DEMANDE DE BREVET EUROPEEN

(21) Numéro de dépôt. **85401390.1**

(22) Date de dépôt: **09.07.85**

(51) Int. Cl.⁴: **B 23 Q 35/121**
**G 05 B 19/42**

(30) Priorité: **12.07.84 FR 8411111**

(43) Date de publication de la demande:
**15.01.86 Bulletin 86/3**

(84) Etats contractants désignés:
**CH DE FR IT LI**

(71) Demandeur: **Ets LEMOINE & Cie**
**34, rue du Dragon**
**F-75006 Paris(FR)**

(72) Inventeur: **Pouyet, Jean**
**15, rue Lepoutre**
**F-94130 Nogent Sur Marne(FR)**

(74) Mandataire: **Boireau, Jacques**
**SOCIETE INTERNATIONALE 19 rue de la Paix**
**F-75002 Paris(FR)**

(54) **Procédé de reproduction de pièce complexe par palpage, fonctionnant en temps réel et installation pour la mise en oeuvre de ce procédé.**

(57) Procédé de reproduction de pièces mécaniques fonctionnant en temps réel et permettant d'éviter l' "overshoot" habituel aux fraiseuses à copier.

Selon l'invention on dispose sur une machine-outil équipée d'un palperu (4), un boîtier mécanique (3) entre le palpeur et son support (2). Ce boîtier permet des déplacements motorisés et mesurables du palpeur par rapport à l'outil (1).

Un calculateur $(C_1)$ programme directement le mouvement du palpeur en commandant les moteurs du boîtier porte-palpeur.

Une mémoire $(C_2)$ utilise les coordonnées précédentes pour définir le mouvement de l'outil, en agissant sur les moteurs d'axes de la machine.

Le palpeur et l'outil sont mobiles simultanément mais le mouvement du palpeur anticipe sur celui de l'outil.

./...

Croydon Printing Company Ltd

EP 0 168 326 A2

FIG.1

PROCEDE DE REPRODUCTION DE PIECE COMPLEXE PAR PALPAGE,
FONCTIONNANT EN TEMPS REEL ET INSTALLATION POUR LA MISE
EN OEUVRE DE CE PROCEDE.

L'invention concerne un procédé de reproduction de pièces mécaniques complexes par une machine-outil équipée d'un palpeur et fonctionant en temps réel. L'invention concerne aussi une installation mettant en oeuvre ce procédé.

Pour la reproduction de telles pièces, on utilise souvent la technique du fraisage par copiage.

Dans ce cas, le palpeur est guidé de façon à suivre le profil d'un modèle. La broche de la machine-outil est asservie au mouvement du palpeur de sorte que l'outil usinera la pièce à l'identique du modèle.

Ce procédé présente l'inconvénient de donner lieu à des erreurs importantes dans la mesure où l'inertie de la machine empêche celle-ci de suivre exactement le mouvement du palpeur notamment dans les petits rayons de courbure parcourus à vitesse élevée.

On peut aussi procéder par enregistrement du mouvement du palpeur sur support magnétique ou bande perforée. Dans ce cas, la vitesse de la broche de la machine-outil peut être adaptée aux rayons de courbure du trajet de l'outil et par suite, la précision de restitution sera meilleure. Mais ce procédé nécessite d'utiliser la machine-outil deux fois : une fois pour le palpage et une fois pour l'usinage.

La présente invention concerne un procédé permettant de réaliser un usinage en temps réel sans avoir les inconvénients des erreurs dues aux temps de réponse de la machine-outil.

Dans cet esprit, l'invention concerne un procédé de reproduction d'une pièce complexe par palpage en temps réel d'un modèle caractérisé en ce qu'on rend mobile un palpeur par rapport à l'outil suivant trois directions perpendiculaires entre elles, en ce qu'on retarde le déplacement de l'outil par rapport à celui dudit palpeur pour mémoriser des coordonnées représentatives d'un nombre limité de points de contact entre le palpeur et ledit modèle et en ce qu'on élabore au fur et à mesure la trajectoire dudit outil à partir de la succession desdites coordonnées.

L'invention concerne aussi une installation de reproduction d'une pièce complexe caractérisée en ce qu'elle comprend des moyens d'usinage solidaires d'un bâti mobile suivant trois directions orthonormées et des moyens de palpage d'un modèle, portés par un boîtier mécanique intermédiaire lui-même solidaire dudit bâti et comportant des glissières de déplacement motorisées pour un mouvement d'amplitude limitée dudit palpeur par rapport audit bâti.

L'invention sera mieux comprise et d'autres avantages de celle-ci apparaîtront mieux à la lumière de la description qui va suivre d'une machine susceptible d'exécuter le procédé de l'invention, faite en référence aux dessins annexés dans lesquels :

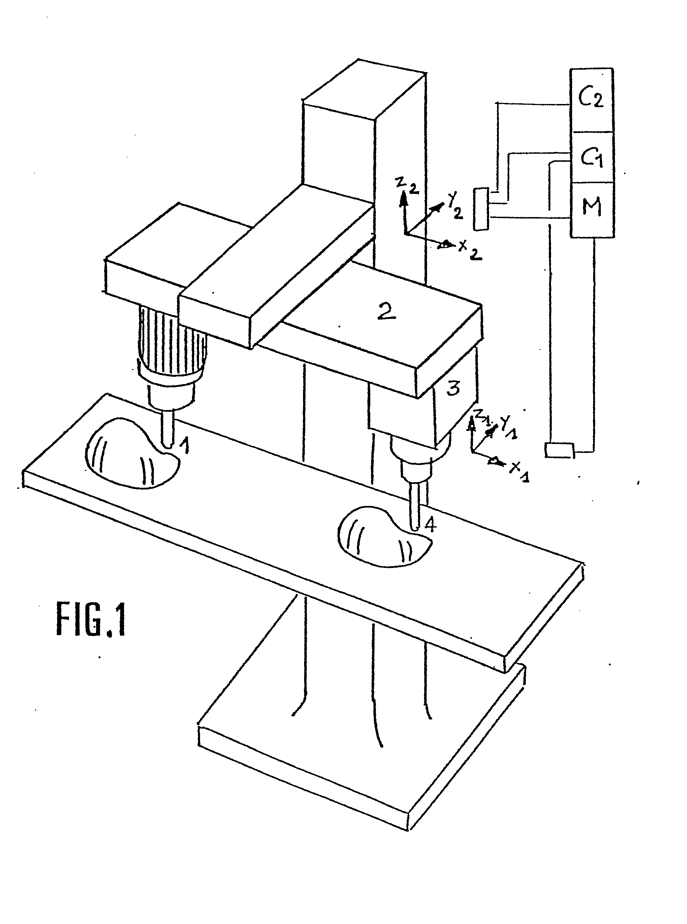

- la figure 1 représente schématiquement les éléments essentiels d'une machine conforme à l'invention; et

- la figure 2 est une vue de détail illustrant le système de déplacement du palpeur.

On voit que la mise en oeuvre du procédé concerne une machine-outil comportant une broche porte-outil 1 mobile suivant trois axes X Y Z perpendiculaires entre eux.

Sous le support 2 de la broche est monté un boîtier mécanique 3 supportant lui-même le palpeur 4.

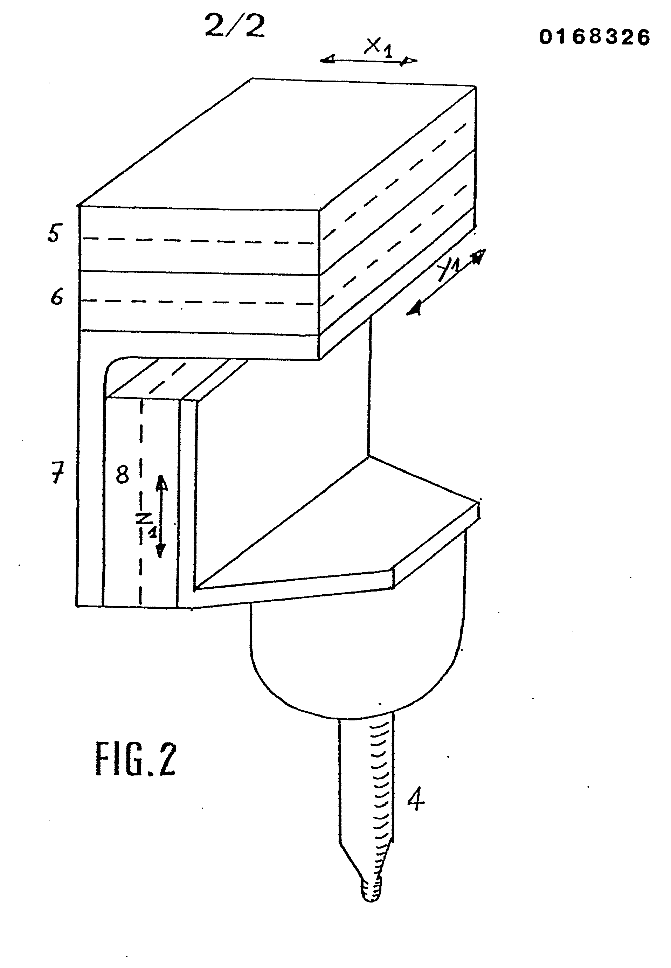

Le boîtier mécanique est détaillé suivant la figure 2. Il est constitué de deux glissières horizontales à mouvements croisés 5 et 6, perpendiculaires entre eux. Sur la glissière 6 est montée une équerre 7 et une autre glissière à mouvement vertical 8. Le palpeur 4 est fixé sur une autre équerre solidaire de la glissière 8.

Chacune des glissières comporte une partie fixe et une partie mobile, le mouvement relatif de ces deux éléments est assuré par un moteur (non représenté) avec une transmission mécanique assurant un déplacement linéaire. Le débattement de chacune des glissières est faible et de l'ordre de 20 à 50 mm. Ainsi, le boîtier mécanique peut être compact et de poids modéré.

Le déplacement relatif de chacun des éléments des glissières est mesuré par les moyens habituellement utilisés dans la technique de la machine-outil, soit par des règles optiques, par des codeurs optiques ou par le comptage des pas des moteurs si ceux-ci fonctionnent en pas à pas ou éventuellement par tout autre moyen connu.

On voit donc que la position du palpeur 4 pourra, à tout moment, être définie par rapport au support mobile 2 au moyen de trois cotes $X_1$ $Y_1$ $Z_1$ délivrées par les moyens de mesure du boîtier mécanique porte-palpeur 3.

La position du support 2 pourra, elle aussi, être définie par rapport à la partie fixe de la machine outil par trois cotes $X_2$ $Y_2$ $Z_2$ obtenues à partir des moyens de mesure dont dispose la machine suivant ses trois axes d'usinage.

Par conséquent, la position du palpeur sera définie intrinsèquement, à tout moment, par la somme des coordonnées $X_1 + X_2$, $Y_1 + Y_2$, $Z_1 + Z_2$.

L'appareillage de commande de déplacement de la machine-outil dispose de deux calculateurs et d'une mémoire M, le premier calculateur $C_1$ est analogue à celui utilisé habituellement pour le déplacement des palpeurs de fraiseuses à copier.

La mémoire M est utilisée pour stocker les coordonnées des cotes du palpeur 4 par rapport à la partie fixe de la machine-outil.

Le calculateur $C_2$ est analogue à ceux utilisés pour déterminer la restitution d'un mouvement continu d'un outil à partir de cotes représentatives de la forme d'un modèle.

On va décrire maintenant le mode de progression habituel du palpeur et de l'outil.

Au début de l'usinage, la fraise et le palpeur se trouvent au repos, les trois glissières du boîtier mécanique étant à leur calage d'origine.

Le calculateur $C_1$ communique au palpeur 4 ses ordres de déplacement par lesquels celui-ci va suivre le profil du modèle. Les deux façons les plus connues pour déplacer un palpeur de reproduction consistent soit à imposer à celui-ci une déflexion constante si le palpeur est analogique et dans ce cas le rayon de l'outil tient compte de cette déflexion, soit à imposer une suite de créneaux dont les segments sont sensiblement parallèles et perpendiculaires au modèle si le palpeur est incrémental. A titre d'exemple, pour le second cas, le déplacement du palpeur pourra être du type décrit dans la demande de brevet européen publiée n° 0077243.

Tout autre processus pourrait être utilisé sans sortir du cadre de l'invention.

Quand le palpeur s'est déplacé de quelques millimètres, l'outil étant jusque là resté fixe, la mémoire M a stocké un certain nombre de points caractéristiques de la forme du modèle dans les limites de déplacement du palpeur.

Dès que la mémoire M dispose d'un nombre de points caractéristiques suffisants, le calculateur $C_2$ peut déterminer les ordres qu'il est nécessaire de donner soit à la commande numérique de la machine si celle-ci en est équipée, soit directement aux moteurs des axes d'usinage de la machine-outil, pour reproduire le trajet déjà parcouru par le palpeur.

La même demande de brevet européen publiée décrit un processus de détermination de la trajectoire de l'otuil connaissant une succession de points de contact entre le palpeur et le modèle, ces points de contact étant appelés pôles.

L'outil se déplacera donc de façon continue et commencera à reproduire sur la pièce le mouvement que le palpeur a parcouru immédiatement avant, sur le modèle.

Pendant le mouvement de la broche, le calculateur $C_1$ continuera à donner les ordres de déplacement au palpeur 4 par l'intermédiaire des trois moteurs du boîtier mécanique 3 suivant les mêmes principes que précédemment, c'est-à-dire que la déflexion sera gardée constante si le palpeur est du type analogique, ou bien le palpeur se déplacera suivant une suite de créneaux si le palpeur est incrémental. Dans ce dernier cas, les instructions de déplacement correspondant à une suite de segments, la définition de ceux-ci tiendra compte du vecteur vitesse de l'outil, puisque la vitesse réelle du palpeur est la somme de deux vitesses, celle de l'outil d'une part et celle du palpeur 4 par rapport à l'outil, d'autre part.

En d'autres termes, pour chaque déplacement élémentaire calculé du palpeur les déplacements réellement imposés aux moteurs du boîtier 3 correspondront aux projections de ce déplacement élémentaire suivant les trois axes corrigées des projections du déplacement élémentaire de l'outil pendant le même intervalle de temps. Par ailleurs, la mémoire M continuera à recevoir et enregistrer les coordonnées des pôles représentatifs de la forme du modèle, exprimées dans le repère $X_2$, $Y_2$, $Z_2$. Le calculateur $C_2$ pourra donc déterminer le mouvement de l'outil indépendamment de celui du palpeur, avec un léger retard sur celui-ci, soit par action sur les moteurs d'usinage, soit par action sur les moyens de commande numérique si la machine en est équipée. Après un premier palpage immédiatement accompagné d'un usinage d'une première copie, on disposera dans la mémoire M de l'ensemble des informations nécessaires pour reproduire ultérieurement un nombre illimité de copies sans procéder à un nouveau palpage.

Dans le cas où on utilise un palpeur analogique, même si le boîtier mécanique a une inertie telle qu'il y a eu une surdéflexion du palpeur, celle-ci pourra être mesurée de façon à en tenir compte et à ne mémoriser que des valeurs exactes des pôles représentatifs de la géométrie du modèle.

Le calculateur $C_2$ ou la commande numérique si la machine en est équipée pourra moduler la vitesse d'avance de l'outil 1 pour que le mouvement de cet outil ne s'éloigne pas de sa trajectoireidéale au-delà d'une

0168326

valeur de référence définie a priori.

En d'autres termes, les problèmes d'erreurs habituellement rencontrés dans les fraises à reproduire conventionnelles à palpeur analogique fonctionnant en temps réel connus sous le nom d' "overshoot" et dûs à l'inertie mécanique de la machine-outil seront éliminés.

Bien entendu, à la fin du palpage la mémorisation de tous les pôles représentatifs de la géométrie du modèle pourra permettre une autre reproduction intégrale du modèle en fonctionnant en usinage en temps totalement différé, donc sans qu'il soit nécessaire de repalper le modèle.

Par ailleurs, aussi bien en usinage en temps réel qu'en temps totalement différé, le calculateur $C_2$ pourra tenir compte de certains paramètres (correction de la flexion mécanique de la tige du palpeur - correction de rayon d'outil) pour définir le programme de restitution du mouvement de l'outil, ceci dans la limite où l'écart relatif entre le palpeur et l'outil ne dépasse pas le débattement possible du boîtier mécanique.

6

**0168326**

REVENDICATIONS

1. Procédé de reproduction d'une pièce complexe par palpage en temps réel d'un modèle, caractérisé en ce qu'on rend mobile un palpeur (4) par rapport à l'outil (1) suivant trois directions perpendiculaires entre elles, en ce qu'on retarde le déplacement de l'outil par rapport à celui dudit palpeur pour mémoriser des coordonnées représentatives d'un nombre limité de points de contact entre le palpeur et ledit modèle et en ce qu'on élabore au fur et à mesure la trajectoire dudit outil à partir de la succession desdites coordonnées.

2. Installation de reproduction d'une pièce complexe, caractérisée en ce qu'elle comprend des moyens d'usinage (1) solidaires d'un bâti (2) mobile suivant trois directions orthonormées $(X_2, Y_2, Z_2)$ et des moyens de palpage (4) d'un modèle, portés par un boîtier mécanique (3) intermédiaire lui-même solidaire dudit bâti et comportant des glissières de déplacement motorisées pour un mouvement d'amplitude limitée dudit palpeur par rapport audit bâti.

3. Installation selon la revendication 2, caractérisée en ce qu'elle comprend des moyens de calcul $(C_1)$ pour piloter lesdites glissières de déplacement dudit boîtier mécanique (3), une mémoire (M) pour enregistrer au fur et à mesure les coordonnées de points caractéristiques dudit modèle et des moyens de calcul $(C_2)$ pour piloter le mouvement de l'outil (1) à partir des coordonnées enregistrées dans ladite mémoire.

FIG.1

$X_1$

5

6

$Y_1$

7

8

$Z_1$

FIG.2

4